Europäisches Patentamt

**European Patent Office**

Office européen des brevets

(11) Numéro de publication: **0 328 459**
**A1**

## DEMANDE DE BREVET EUROPEEN

(21) Numéro de dépôt: **89400379.7**

(22) Date de dépôt: **09.02.89**

(51) Int. Cl.⁴: **G 11 B 5/325**
**G 11 B 5/127, G 11 B 5/11,**
**B 41 J 3/16**

(30) Priorité: **10.02.88 FR 8801590**

(43) Date de publication de la demande:
**16.08.89 Bulletin 89/33**

(84) Etats contractants désignés: **DE GB IT**

(71) Demandeur: **EUROFARAD EFD**
**93 rue Oberkampf**
**F-75011 Paris (FR)**

(72) Inventeur: **Benain, Ezer**
**4, Rue des Archives**
**F-94000 Créteil (FR)**

**Lelièvre, Jean-Yves**
**3 allée des Capucines**
**F-78480 Verneuil sur Seine (FR)**

(74) Mandataire: **Martin, Jean-Jacques et al**
**Cabinet REGIMBEAU 26, Avenue Kléber**
**F-75116 Paris (FR)**

(54) Tête magnétique à aimant permanent.

(57) La présente invention concerne une tête magnétique qui comprend un aimant permanent (10) et deux éléments de blindage (20a, 20b) en matériau magnétique placés en regard et à distance des faces polaires (11, 12) de l'aimant, afin de définir deux entrefers actifs.

FIG_1

EP 0 328 459 A1

**Description**

## TETE MAGNETIQUE A AIMANT PERMANENT

La présente invention concerne le domaine des têtes magnétiques.

La présente invention a pour objectif principal de proposer une tête magnétique apte à magnétiser un support magnétique tel qu'une encre magnétique ou à effacer une prémagnétisation.

Les têtes magnétiques utilisées de nos jours comprennent un circuit magnétique en forme d'anneau coupé par un entrefer actif étroit et un bobinage électrique qui soit reçoit du courant, dans le cas d'un enregistrement ou d'un effacement, soit fournit une force électromotrice d'induction, dans le cas d'une lecture.

Les têtes magnétiques à bobinage ont déjà rendu de grands services. Elles présentent cependant l'inconvénient majeur d'exiger un raccordement électrique.

On a tenté d'utiliser des têtes magnétiques à aimant permanent, notamment pour l'effacement. Les têtes magnétiques à aimant permanent jusqu'ici proposées ne donnent cependant pas satisfaction car elles laissent sur le support magnétique une aimentation modulée aléatoirement en amplitude, qui génère un bruit de fond important. De ce fait, ces têtes magnétiques à aimant permanent sont abandonnées de nos jours (voir Techniques de l'Ingénieur, "Enregistrement magnétique - Etude Théorique" E 2641-4.2).

La présente invention a maintenant pour but de proposer une nouvelle tête magnétique qui élimine les inconvénients des têtes antérieures, en particulier qui soit simple, robuste, fiable et économique.

Ce but est atteint dans le cadre de la présente invention grâce à une tête magnétique qui comprend un aimant permanent et deux éléments de blindage en matériau magnétique placés en regard et à distance des faces polaires de l'aimant, afin de définir deux entrefers actifs.

D'autres caractéristiques, buts et avantages de la présente invention apparaîtront à la lecture de la description détaillée qui va suivre, et en regard des dessins annexés, donnés à titre d'exemple non limitatif et sur lesquels :

- la figure 1 représente une vue schématique en perspective d'une tête magnétique conforme à la présente invention, avec découpe partielle de certaines pièces,
- la figure 2 illustre schématiquement l'action de la tête magnétique conforme à la présente invention sur un support à magnétiser, et
- la figure 3 représente une vue schématique en perspective éclatée d'une tête magnétique conforme à la présente invention.

La tête magnétique conforme à la présente invention comprend un aimant permanent 10. Cet aimant 10 est de préférence formé d'un bloc parallélépipédique.

Les faces polaires de l'aimant 10 sont planes et référencées 11, 12. Les faces polaires 11, 12 sont perpendiculaires à l'axe 13 d'aimantation sud-nord.

Une face latérale 14 parallèle à l'axe d'aimantation 13, et donc perpendiculaire aux faces polaires 11, 12 sera dite face latérale principale par la suite. Cette face latérale principale 14 correspond à la face de l'aimant 10 destinée à reposer contre le support magnétique 80 à magnétiser ou à effacer.

La face latérale de l'aimant 10 opposée à la face latérale principale 14 est référencée 15. Cette face 15 est parallèle à l'axe d'aimantation 13 et donc perpendiculaire aux faces polaires 11, 12.

Enfin, les deux dernières faces latérales de l'aimant 10, qui seront dénommées faces secondaires par la suite sont référencées 16 et 17. Ces faces secondaires 16, 17 sont parallèles à l'axe d'aimantation 13 et perpendiculaires aux faces polaires 11, 12 et aux faces latérales 14 et 15 précitées.

La tête magnétique conforme à la présente invention comprend en outre deux éléments de blindage 20a, 20b, placés en regard, et à distance, des faces polaires 11, 12 de l'aimant.

Ainsi, il est défini un premier entrefer 22a entre la face polaire 11 de l'aimant et l'élément de blindage 20a, et un deuxième entrefer 22b entre la face polaire 12 et l'élément de blindage 20b.

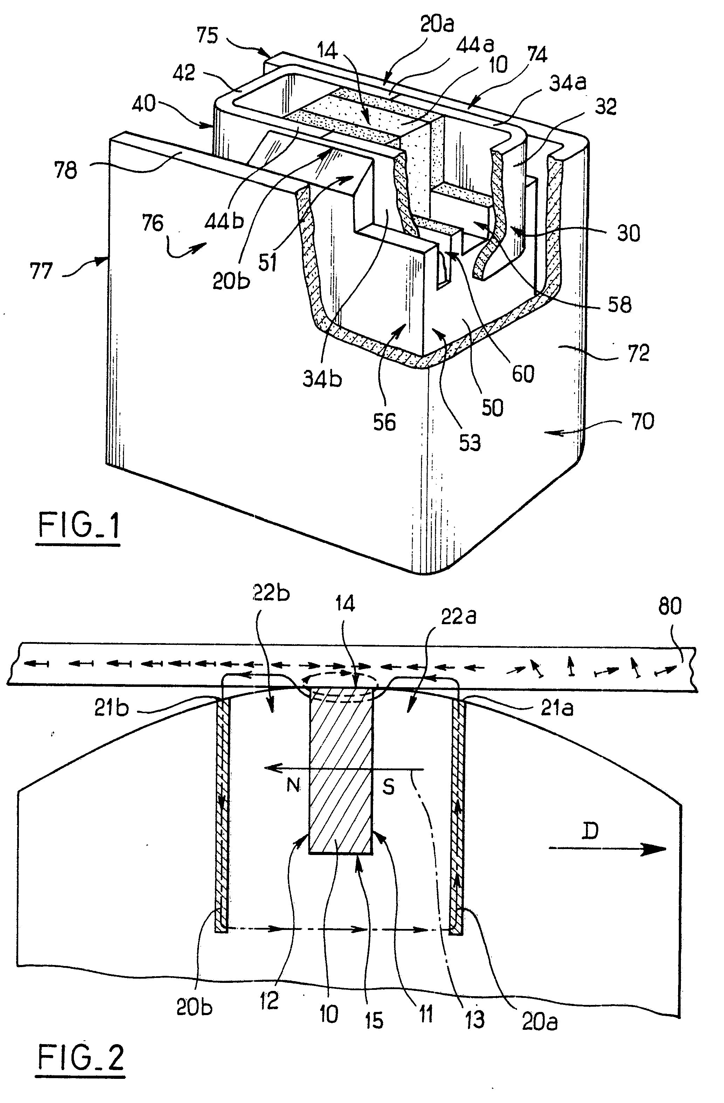

De préférence les entrefers 22a, 22b possèdent la même largeur. Comme illustré sur les figures annexées les éléments de blindage 20a, 20b, ne doivent pas se prolonger au-delà de la face latérale principale 14 de l'aimant. Les bords libres 21a, 21b des éléments de blindage 20a, 20b peuvent être coplanaires de la face latérale principale 14. De préférence, comme illustré sur la figure 2, il seront placés légèrement en retrait de la face latérale principale 14.

Par contre, les éléments de blindage 20a, 20b, se prolongent avantageusement au-delà de la face latérale 15 de l'aimant.

Selon un mode de réalisation considéré actuellement comme préférentiel, les deux éléments de blindage 20a, 20b, sont réalisés à l'aide de deux pièces en U 30, 40 accolées.

Les deux pièces 30, 40 sont ainsi placées symétriquement autour de l'aimant 10, pour définir une ceinture continue en O, comme illustré sur la figure 1.

Les pièces 30, 40 se composent chacune d'une âme plane 32, 42 et de deux ailes planes 34a, 34b ; 44a, 44b, parallèles entre elles et orthogonales à l'âme 32, 42 respectivement associée.

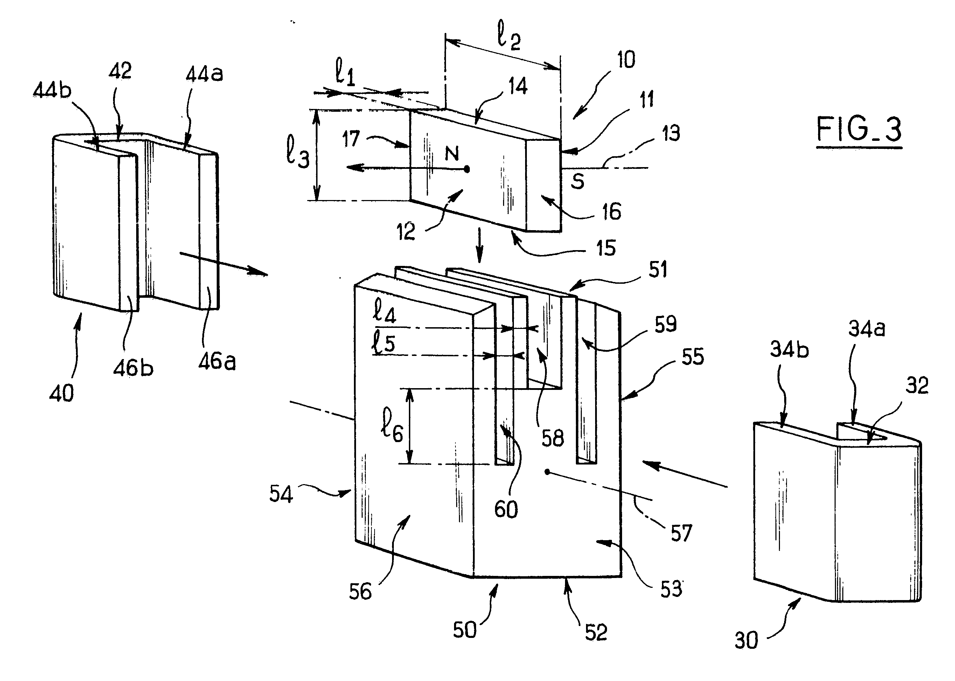

Pour former la ceinture continue en O autour de l'aimant 10, les surfaces libres, telles que les surfaces référencées 46a et 46b sur la figure 3, des ailes 34a, 44a, d'une part, et 34b, 44b, d'autre part, sont accolées.

Ainsi, les âmes 32, 42 des pièces 30, 40, sont placées en regard et à distance des faces latérales secondaires 16, 17 de l'aimant.

Les ailes 34a, 44a, placées en regard et à distance de la face polaire 11 de l'aimant, constituent en combinaison le premier élément de blindage 20a. Les ailes 34b, 44b, placées en regard et à distance de la face polaire 12, constituent en combinaison le second élément de blindage 20b.

De préférence, les pièces 30, 40 constituant les éléments de blindage, sont réalisées en alliage de ferronickel ou autre matériau magnétique, tel que le matériau vendu sous la dénomination Mumétal.

Pour maintenir l'aimant permanent 10 par rapport aux pièces 30, 40 constituant les éléments de blindage, les entrefers 22a, 22b, sont constitués d'une cale de matériau non magnétique.

Plus précisément encore, la cale précitée est formée de préférence d'un bloc parallèlépipèdique unique portant la référence générale 50 sur les figures annexées.

Ce bloc 50 comprend deux faces principales opposées 51, 52, deux faces secondaires opposées 53, 54 et deux faces auxiliaires opposées 55, 56.

La face principale 51 du bloc 50 effleure la face latérale principale 14 de l'aimant et le bord libre 21a, 21b, des éléments de blindage 20a, 20b. De préférence, la face principale 51 n'est pas plane. La surface 51 est convexe, son sommet coïncidant avec le plan de symétrie de l'aimant 10 orthogonal à l'axe d'aimantation 13. La surface principale 51 du bloc 50 peut être formée par exemple d'une calotte cylindrique de révolution autour d'un axe 57 transversal aux surfaces secondaires 16, 17 de l'aimant 10 et transversal à l'axe d'aimantation 13.

La face principale opposée 52 est généralement plane et parallèle à la face latérale 15 de l'aimant 10.

Les faces secondaires 53, 54 du bloc 50 sont parallèles entre elles et parallèles aux faces secondaires 16, 17 de l'aimant.

Les deux faces auxiliaires 55, 56 du bloc 50 sont parallèles entre elles et parallèles aux faces polaires 11, 12 de l'aimant.

Le bloc 50 en matériau non magnétique comprend trois rainures 58, 59 et 60 qui débouchent sur la face principale 51 et les faces secondaires 53, 54. Les rainures 58, 59 et 60 s'étendent parallèlement aux faces polaires 11, 12 de l'aimant.

La rainure centrale 58 est destinée à recevoir l'aimant 10. La profondeur de la rainure centrale 58 est telle que la face latérale principale 14 de l'aimant effleure la surface principale 51 du bloc 50.

Les rainures latérales 59 et 60 ménagées dans le bloc 50 sont destinées à recevoir les ailettes 34a, 44a et 34b, 44b, des pièces 30, 40. Les rainures latérales 59, 60 sont donc plus profondes que la rainure centrale 58.

Le bloc 50 de matériau non magnétique servant de cale pour assurer le maintien de l'aimant 10 par rapport aux pièces de blindage 30, 40 est de préférence réalisé en résine époxy.

De plus, un blindage externe 70 peut être placé sur l'extérieur du bloc-cale 50. Le blindage externe 70 peut être réalisé en alliage de ferronickel ou autre matériau magnétique, tel que le matériau vendu sous dénomination en Mumétal.

Le blindage externe 70 peut être formé d'un anneau continu qui entoure l'anneau formé par les pièces de blindage 30 et 40.

En variante, comme illustré sur la figure 1, le blindage externe 70 peut être formé d'une pièce en U comprenant une âme plane 72 et deux ailes planes 74, 76, parallèles et orthogonales à l'âme 72. L'âme 72 s'étend en regard et à distance de l'âme 32 de la pièce de blindage 30. Les ailes 74, 76 s'étendent parallèlement aux éléments de blindage 20a, 20b, à distance de ceux-ci. Les bords libres 75, 77 des ailes 74, 76 sont reliés à l'utilisation par une pièce support en matériau magnétique afin de définir un blindage externe continu.

On notera que le blindage externe 70 ne doit pas se prolonger au-delà de la face latérale principale 14 de l'aimant. Au contraire le bord libre 78, en forme de U, du blindage externe 70, doit être placé en retrait de la face latérale principale 14, c'est-à-dire dans un plan compris entre la face latérale principale 14 de l'aimant 10 et la face latérale opposée 15.

Pour faciliter la fixation de la tête magnétique conforme à la présente invention, un boîtier en matériau non magnétique, de préférence de l'aluminium, peut être placé entre le bloc-cale 50 et le blindage externe 70.

Un tel boîtier en aluminium peut être l'objet de nombreuses variantes de réalisation et ne sera donc pas décrit plus en détail par la suite.

Pour résumer, l'assemblage de la tête magnétique conforme à la présente invention peut être effectué selon le processus comprenant les étapes consistant à placer et coller l'aimant 10 dans la rainure centrale 58 du bloc-cale 50, placer et coller les éléments de blindage 20a, 20b dans les rainures latérales 59, 60 du bloc-cale 50, placer le bloc-cale 50 ainsi équipé dans un boîtier d'aluminium, placer le boîtier d'aluminium dans un blindage extérieur 70, et couler de la résine dans les intervalles libres du dispositif.

La Demanderesse a réalisé des essais totalement satisfaisants à l'aide d'aimants permanents type FERRAM S présentant une induction rémanente Br comprise entre 3 300 et 4 100 Gauss et de préférence de l'ordre de 3 700 Gauss. Les aimants permanents 10 utilisés par la Demanderesse lors des essais possédaient une épaisseur 11 (distance entre les faces polaires 11, 12 de l'aimant 10) de l'ordre de 2 mm, une largeur 12 (distance entre les faces secondaires 16, 17) comprise entre 7,7 et 9,75 mm, et une hauteur 13 (distance comprise entre les faces latérales 14 et 15) de l'ordre de 5,5 mm. Par ailleurs, lors des essais réalisés par la Demanderesse la largeur 14 des entrefers 22a, 22b (épaisseur du voile du bloc-cale 50 séparant la rainure centrale 58 des rainures latérales 59, 60) était de l'ordre de 1 mm, l'épaisseur 15 des ailes 34a, 34b, 44a, 44b, qui coïncide avec la largeur des rainures latérales 59, 60 était de l'ordre de 1 mm, et les éléments de blindage 20a, 20b se prolongeaient au-delà de la face latérale 15 de l'aimant, d'une distance 16 de l'ordre de 5 mm.

La tête magnétique conforme à la présente invention a donné pleinement satisfaction lors d'essais avec des encres magnétiques de 250 à 5 000 Oersteds.

On a illustré schématiquement sur la figure 2 l'action de la tête magnétique conforme à la présente invention sur un support magnétique 80 tel qu'une encre. Sur la figure 2, le support magnétique 80 est représenté en coupe. Les directions élémentaires d'aimantation dans le support 80 sont représentées par des petites flèches.

On suppose dans le cadre de l'illustration de la figure 2, que, le support magnétique 80 étant fixe, la tête magnétique est déplacée par rapport au support 80 dans le sens de la flèche référencée D, la face latérale principale 14 de l'aimant 10 étant accolée contre le support magnétique 80.

En avant de la tête magnétique le support 80 présente une aimentation aléatoire (voir la droite de la figure 2) ; en revanche après passage de la tête magnétique, le support 80 présente une aimantation d'orientation régulière, imposée par le champ de fuite au niveau des entrefers 22a, 22b, et dont le sens coïncide avec le sens sud-nord de l'aimant 10.

Les lignes d'induction du spectre magnétique généré au niveau des entrefers 22a, 22b, grâce à la coopération de l'aimant 10 et des éléments de blindage 20a et 20b sont représentées en traits interrompus sur la figure 2.

Bien entendu la présente invention n'est pas limitée au mode de réalisation particulier qui vient d'être décrit mais s'étend à toutes variantes conformes à son esprit.

**Revendications**

**1.** Tête magnétique caractérisée par le fait qu'elle comprend un aimant permanent (10) et deux éléments de blindage (20a, 20b) en matériau magnétique placés en regard et à distance des faces polaires (11, 12) de l'aimant, afin de définir deux entrefers actifs.

**2.** Tête magnétique selon la revendication 1, caractérisée par le fait que les éléments de blindage (20a, 20b) sont dissymétriques par rapport à l'axe d'aimantation (13).

**3.** Tête magnétique selon l'une des revendications 1 ou 2, caractérisée par le fait que les éléments de blindage (20a, 20b) effleurent sensiblement une face latérale principale (14) de l'aimant (10), perpendiculaire aux faces polaires (12, 13), destinée à reposer contre le support magnétique à magnétiser, tandis que ces éléments de blindage se prolongent au-delà de l'aimant (10) sur la face latérale opposée (15).

**4.** Tête magnétique selon l'une des revendications 1 à 3, caractérisée par le fait que les éléments de blindage (20a, 20b) forment une ceinture continue qui entoure l'aimant (10).

**5.** Tête magnétique selon l'une des revendications 1 à 4, caractérisée par le fait que les éléments de blindage (20a, 20b) sont formés de deux pièces (30, 40) en forme de U, accolées.

**6.** Tête magnétique selon l'une des revendications 1 à 5, caractérisée par le fait que les éléments de blindage (20a, 20b) sont réalisées en alliage de ferronickel ou autre matériau magnétique.

**7.** Tête magnétique selon l'une des revendications 1 à 6, caractérisée par le fait qu'un blindage auxiliaire (70) est placé sur l'extérieur des deux éléments de blindage (20a, 20b).

**8.** Tête magnétique selon la revendication 7, caractérisée par le fait que le blindage auxiliaire (70) est placé en retrait de la face latérale principale (14) de l'aimant destinée à reposer contre le support magnétique à magnétiser.

**9.** Tête magnétique selon l'une des revendications 1 à 8, caractérisée par le fait que l'aimant permanent (10) présente une induction rémanente comprise entre 3 300 et 4 100 Gauss et de préférence de l'ordre de 3 700 Gauss.

**10.** Tête magnétique selon l'une des revendications 1 à 9, caractérisée par le fait que la largeur (14) de chaque entrefer actif (22) est de l'ordre de 1mm.

## FIG_1

## FIG_2

$$FIG\_3$$

EP 0 328 459 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | PATENT ABSTRACTS OF JAPAN vol. 4, no. 146 (P-31) <628> 15 octobre 1980, & JP-A-55 093526 (PIONEER K.K.) 16 juillet 1980, * voir le document en entier * | 1, 2 | G11B5/325 G11B5/127 G11B5/11 B41J3/16 |
| A | | 5 | |
| A | PATENT ABSTRACTS OF JAPAN vol. 10, no. 19 (P-423) <2076> 24 janvier 1986, & JP-A-60 171602 (TOSHIBA K.K.) 05 septembre 1985, * voir le document en entier * | 7, 8 | |

DOMAINES TECHNIQUES
RECHERCHES (Int. Cl.4 )

G11B
B41J
G06K
G03G

Le présent rapport a été établi pour toutes les revendications

| Lieu de la recherche | Date d'achèvement de la recherche | Examinateur |
|---|---|---|
| LA HAYE | 16 MAI 1989 | BENFIELD A. D. |

EPO FORM 1503 03.82 (P0402)